# EUROPEAN PATENT SPECIFICATION

(11) **EP 3 548 956 B1**
(45) Date of publication and mention of the grant of the patent: **14.08.2024**
(21) Application number: 17811347.8
(22) Date of filing: 27.11.2017
(51) Int. Cl.: G02B 27/01

(54) **IMAGING SYSTEM AND METHOD OF PRODUCING CONTEXT AND FOCUS IMAGES**
BILDGEBUNGSSYSTEM UND VERFAHREN ZUR HERSTELLUNG VON KONTEXT UND FOKUSBILDERN
SYSTÈME D'IMAGERIE ET PROCÉDÉ DE PRODUCTION D'IMAGES DE CONTEXTE ET DE MISE AU POINT

(30) Priority: 01.12.2016 US 201615366424; 27.06.2017 US 201715633912
(43) Date of publication of application: 09.10.2019
(73) Proprietor: Varjo Technologies Oy, 00100 Helsinki (FI)
(72) Inventor: KONTTORI, Urho, 00260 Helsinki (FI); MELAKARI, Klaus, 90140 Oulu (FI); OLLILA, Mikko, 33710 Tampere (FI); MIETTINEN, Ville, 00100 Helsinki (FI)
(74) Representative: Aaltonen, Janne Lari Antero
(86) International application number: PCT/FI2017/050826
(87) International publication number: WO 2018/100238

(56) References cited:
- EP-A1- 1 898 632
- WO-A1-2013/082387
- US-A- 4 028 725
- US-A1- 2010 149 073
- US-A1- 2011 043 644
- US-A1- 2013 070 109
- US-A1- 2015 173 846
- US-A1- 2015 379 772
- US-A1- 2016 335 981
- US-A1- 2016 343 164
- US-A1- 2018 220 068

## Description

### TECHNICAL FIELD

The present invention relates generally to representation of visual information; and more specifically, to imaging systems comprising imaging sensors and processors. Furthermore, the present invention also relates to methods of producing context and focus images for display apparatuses via the aforementioned imaging systems.

### BACKGROUND

Recently, technologies such as virtual reality, augmented reality, and so forth, have witnessed a rapid increase in their use. Such technologies present a simulated environment (or a virtual world) to a user of a specialized device. In such instance, the user is provided with a greater feeling of immersion in the simulated environment, by using contemporary techniques such as stereoscopy, that enhance the user's perception of reality around him/her.

Generally, devices such as virtual reality devices are used by the user to experience the simulated environment. In an example, the virtual reality device may be a binocular virtual reality device having one display per eye of the user. Furthermore, different two-dimensional images (also known as stereograms) are displayed on both displays of the binocular virtual reality device. Specifically, such different two-dimensional images are combined to create an illusion of depth and consequently, the combined image is projected onto the eyes of the user. Often, such different two-dimensional images may be captured and communicated by suitable imaging equipment, to the virtual reality devices.

However, conventionally employed imaging equipment have certain limitations. Firstly, the existing imaging equipment are limited in their ability to capture two-dimensional images of a very high resolution. Moreover, the imaging equipment requires an impractical number of photo sensors to replicate visual acuity of human visual system in the captured two-dimensional images. Secondly, the imaging equipment requires large bandwidth to communicate the captured two-dimensional images to the virtual reality devices. Consequently, there exist limitations in meeting data throughput limitations of a communication network between the imaging equipment and the virtual reality devices. Thirdly, the imaging equipment consume significant amount of power to capture, process and communicate the captured two-dimensional images to the virtual reality devices.

Document US 2010/149073 discloses a near-to-eye display system for forming an image as an illuminated region on a retina of at least one eye of a user. The system includes a source of modulated light, a proximal optic positionable adjacent an eye of the user to receive the modulated light. The proximal optic has a plurality of groups of optically redirecting regions. The optically redirecting regions are configured to direct a plurality of beams of the modulated light into a pupil of the eye to form a contiguous illuminated portion of the retina of the eye. A first group of the optically redirecting regions is configured to receive modulated light from the source and redirect beams of the modulated light into the pupil of the eye for illumination of a first portion of the retina. A second group of the optically redirecting regions is configured to receive modulated light from the source and redirect beams of the modulated light into the pupil of the eye for illumination of a second portion of the retina. Document US 2016/343164 presents systems and methods for generating and animating virtual representations to a wearer of a HMD device. A virtual representation associated with a real-world object is retrieved based on received input data. The retrieved virtual representation is rendered for display to the wearer. Sensor data tracking one or more of the real-world object and the wearer is also received. The rendered virtual representation can be further animated based on the sensor data. Document US 2016/335981 concerns remote control methods, systems, and devices. In one aspect, a remote control method using a wearable device is provided. In the method, a communication connection is established with a remote camera over a network and the field of view (FoV) of the remote camera is controlled according to a detected movement of the user wearing the wearable device. Document WO 2013/082387 discusses 3D stereo vision goggles or other platforms that could be used for enhanced vision systems for surgical applications, for patients with macular degeneration, or for entertainment or business applications. The presented solution takes images received from a video input source, and segments and projects those images off a mirror defined by a portion of an ellipsoid and directly onto the retina of the eye of a user. It allows users to enjoy 3D stereoscopic vision with an increased field of view, increased image quality, increased comfort, reduced cost, and other benefits. Document EP 1898632 discloses an image pickup apparatus includes image pickup means, user information acquisition means, and control means. The image pickup means is configured to pick up an image while regarding a user's gaze direction as the direction of a subject. The user information acquisition means is configured to acquire information about the motion or physical status of the user. The control means is configured to judge the intention or status of the user from the information acquired by the user information acquisition means and control the operation of the image pickup means in accordance with judgment results. Document US 4028725 concerns a high-resolution vision system comprising remotely positioned image-sensing means, such as a TV camera, and a head-mounted display that is used by an observer to view the image picked up by the remote sensors. Both the sensing means and the display are servo controlled to follow the eye line-of-sight (LOS) of the observer. The eye LOS is characterized by the eye angle of the observer with respect to his head plus the head angle with respect to a reference axis, such as the center line of an aircraft. Because the display follows eye motion by means of a servoed mirror or beamsplitter in front of the eye, the eye always looks at a fixed point on the display. The resolution of the display preferably is increased on the LOS so that the display characteristics closely match the eye, i.e., high resolution on the eye LOS and lower resolution in the peripheral region. This preferably is accomplished by using dual sensing means, such as dual TV cameras, one with a wide and the other with a narrow field of view. The output from these sensing means is processed by head-mounted cathode ray tubes, then optically combined with preferably a 1:1 magnification, and projected into the eye by means of the servoed beamsplitter. In a further embodiment of the invention, the sensing means can be a computer, resulting in optical images that appear fixed in space. Alternately, the computer-generated images can follow head motion. Document US 2015/173846 A1 discloses a microsurgery system for displaying in real-time magnified digital image sequences of an operated area for allowing a user to perform procedures in the operating room.

Therefore, in light of the foregoing discussion, there exists a need to overcome the aforementioned drawbacks associated with imaging equipment associated with virtual reality devices.

### SUMMARY

The present invention provides an imaging system according to claim 1. The present invention also provides a method of producing a context image and a focus image for a display apparatus, via such an imaging system. The present invention seeks to provide a solution to the existing problem of limited resolution and bandwidth limitations associated with conventional imaging equipment. An aim of the present invention is to provide a solution that overcomes at least partially the problems encountered in the prior art, and provides a robust, reliable and efficient imaging system for use with the display apparatus.

The invention is a system comprising:
- at least one imaging sensor per eye of a user;
- a processor coupled to the at least one imaging sensor, the processor being configured to control the at least one imaging sensor to capture at least one image of a real world environment, and
- a display apparatus, comprising means for tracking a gaze direction of the user, at least one context image renderer for rendering a context image, at least one focus image renderer for rendering a focus image, and an optical combiner,

wherein the processor is communicably coupled with the display apparatus, and
wherein the processor is configured to:
   - receive, from the display apparatus, information indicative of the gaze direction of the user;
   - determine a region of visual accuracy of the at least one image, based upon the gaze direction of the user;
   - process the at least one image to generate the context image and the focus image, the context image having a first resolution and the focus image having a second resolution, the second resolution being higher than the first resolution, wherein, when processing the at least one image, the processor is configured to crop the at least one image to generate the focus image in a manner that the focus image substantially corresponds to the region of visual accuracy of the at least one image; and
   - communicate the generated context image and the generated focus image to the display apparatus,
wherein the optical combiner of the display apparatus is operable to optically combine a projection of the rendered context image and a projection of the rendered focus image;
further comprising means for adjusting an orientation of the at least one imaging sensor, wherein the display apparatus comprises means for tracking a head orientation of the user, and wherein the processor is configured to:
   - receive, from the display apparatus, information indicative of the head orientation of the user;
   - control the means for adjusting the orientation of the at least one imaging sensor, based upon the head orientation of the user; and
   - crop the at least one image to a predefined shape when generating the focus image;
wherein the predefined shape is selected from a circle, a polygon, and an ellipse,
further wherein the at least one imaging sensor comprises at least one context imaging sensor per eye of the user and at least one focus imaging sensor per eye of the user, the at least one image comprising at least one first image captured by the at least one context imaging sensor and at least one second image captured by the at least one focus imaging sensor, wherein a field of view of the at least one focus imaging sensor is narrower than a field of view of the at least one context imaging sensor, further wherein the processor is configured to control the at least one context imaging sensor to employ at least two different exposures using a high dynamic range technique, wherein a longer exposure from amongst the at least two different exposures is employed for a region of visual accuracy of the at least one first image, the region of visual accuracy of the at least one first image being based upon the gaze direction of the user .

The present invention also provides a method of producing a context image and a focus image for a display apparatus, via an imaging system comprising at least one imaging sensor per eye of a user, the imaging system being communicably coupled with the display apparatus, the method comprising:
- receiving, from the display apparatus, information indicative of a gaze direction of the user;
- controlling the at least one imaging sensor to capture at least one image of a real world environment;
- determining a region of visual accuracy of the at least one image, based upon the gaze direction of the user;
- processing the at least one image to generate the context image and the focus image, the context image having a first resolution and the focus image having a second resolution, the second resolution being higher than the first resolution, wherein the processing of the at least one image comprises cropping the at least one image to generate the focus image in a manner that the focus image substantially corresponds to the region of visual accuracy of the at least one image;
- communicating the generated context image and the generated focus image to the display apparatus; and
- optically combining a projection of the generated context image and a projection of the generated focus image for display;

wherein the imaging system comprises means for adjusting an orientation of the at least one imaging sensor, and wherein the method further comprises:
   - receiving, from the display apparatus, information indicative of a head orientation of the user;
   - controlling the means for adjusting the orientation of the at least one imaging sensor, based upon the head orientation of the user; and
   - cropping the at least one image to a predefined shape when generating the focus image;
wherein the predefined shape is selected from a circle, a polygon, and an ellipse,
further wherein the at least one imaging sensor comprises at least one context imaging sensor per eye of the user and at least one focus imaging sensor per eye of the user, the at least one image comprising at least one first image captured by the at least one context imaging sensor and at least one second image captured by the at least one focus imaging sensor, a field of view of the at least one focus imaging sensor being narrower than a field of view of the at least one context imaging sensor, and wherein the method further comprises actuating a direction of view of the at least one focus imaging sensor prior to capturing the at least one second image, based upon the gaze direction of the user,
wherein the method further comprises controlling the at least one context imaging sensor to employ at least two different exposures using a high dynamic range technique, wherein a longer exposure from amongst the at least two different exposures is employed for a region of visual accuracy of the at least one first image, the region of visual accuracy of the at least one first image being based upon the gaze direction of the user.

Embodiments of the present disclosure substantially eliminate or at least partially address the aforementioned problems in the prior art, and enables enhancement of resolution during capture of images using the imaging system and use of limited bandwidth for communication of focus and context images from the imaging system to the display apparatus.

Additional aspects, advantages, features and objects of the present invention would be made apparent from the drawings and the detailed description of the illustrative embodiments construed in conjunction with the appended claims that follow.

It will be appreciated that features of the present invention are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is a block diagram of architectures of an imaging system and a display apparatus, in accordance with an embodiment of the present invention;
FIG. 2 is a schematic illustration of an imaging sensor (for example, such as an imaging sensor of FIG. 1), in accordance with an embodiment of the present invention;
FIG. 3 is a schematic illustration of an exemplary sampling and readout circuitry of the imaging sensor shown in FIG. 2, in accordance with an embodiment of the present invention;
FIG. 4 is an exemplary representation of a context image and a focus image to be presented via a display apparatus, in accordance with an embodiment of the present invention;
FIGs. 5A-5B are schematic illustrations of an exemplary operation of a display apparatus with respect to a user's eye, in accordance with an embodiment of the present invention;
FIG. 6A-6I are exemplary implementations of a display apparatus, in accordance with various embodiments of the present invention; and
FIG. 7 illustrates steps of a method of producing a context image and a focus image for a display apparatus, via an imaging system, in accordance with an embodiment of the present invention;

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

The present invention provides an system and a method according to the enclosed independent claims. The present disclosure provides the aforementioned imaging system and the aforementioned method of producing the context image and the focus image for the display apparatus, via such an imaging system. The described imaging system allows for reduction of noise within the context and focus images. Furthermore, the at least one imaging sensor of such an imaging system allows for capturing the at least one image of the real world environment at a very high resolution, without increase in a number of photo sensors thereof. Beneficially, the described imaging system meets data throughput limitations of a communication network between the processor and the display apparatus. Moreover, the described imaging system and method allow for significant reduction in amount of power required to capture and process the captured at least one image, and power required to communicate the generated focus and context images to the display apparatus.

Throughout the present disclosure, the term *"imaging system"* relates to equipment configured to generate the context image and the focus image for the display apparatus. In such an instance, the imaging system is configured to capture and process the at least one image to generate the context image and the focus image for the display apparatus. Notably, the at least one image depicts a visual scene to be displayed via the display apparatus, and may be therefore referred to as an *"input image".* The at least one image depicts at least a part of a simulated environment that is to be presented to the user of the display apparatus. It will be appreciated that the context and focus images are subsequently employed to present the simulated environment to the user when he/she wears the display apparatus. In such an instance, the display apparatus is operable to act as a device (for example, such as a virtual reality headset, a pair of virtual reality glasses, and the like) for presenting the simulated environment to the user.

Optionally, the at least one image is stored in a memory unit coupled to the display apparatus. In such an instance, the memory unit could be implemented on the imaging system and could be wirelessly coupled to the display apparatus. Furthermore, the at least one image is stored in a suitable format, for example, such as Moving Pictures Experts Group (MPEG) format, Joint Photographic Experts Group (JPEG) format, Tagged Image File Format (TIFF), Portable Network Graphics (PNG), Graphics Interchange Format (GIF), Bitmap file format (BMP), and the like.

Throughout the present disclosure, the term *"at least one imaging sensor"* relates to equipment (for example, such as an array of photo sensors) that is operable to detect and process light from the real world environment to capture the at least one image of the real world environment. In such an instance, the at least one image of the real world environment may be captured from a same perspective or different perspectives. Optionally, the at least one imaging sensor per eye of the user comprises a plurality of photo sensors. More optionally, the plurality of photo sensors is arranged in a grid-like manner. In such an instance, each of the plurality of photo sensors generates a charge proportional to an amount of light incident thereon, to constitute the at least one image. Examples of the plurality of photo sensors include, but are not limited to, photodiodes, photoresistors, phototransistors, and photosensitive field effect transistors. Optionally, a pixel pitch between the plurality of photo sensors is of the order of a few microns. Furthermore, optionally, a colour filter mosaic is superposed on the plurality of photo sensors of the at least one imaging sensor. More optionally, the colour filter mosaic comprises a plurality of colour filters, wherein one colour filter is superposed on one photo sensor of the at least one imaging sensor. In such an instance, the plurality of colour filters is employed to filter the light from the real world environment, prior to incidence of such light onto the plurality of photo sensors. Specifically, each colour filter is configured to pass therethrough, only light within a specific wavelength range. Consequently, filtered light from the real world environment is incident on the plurality of photo sensors. It will be appreciated that such arrangement of the colour filter mosaic allows for capturing wavelength information in the light from the real world environment, to produce colours in the captured at least one image of the real world environment.

Optionally, in this regard, the plurality of colour filters comprises green colour filters, blue colour filters, and red colour filters in a ratio 2:1:1. In such an instance, a number of the green colour filter is twice as much as a number of both the blue colour filters and the red colour filters. As an example, a colour filter mosaic M1 may be superposed on a 4x4 grid of photo sensors. In such an example, the colour filter mosaic M1 may comprise 16 colour filters, wherein green, blue and red colour filters are in a ratio 2:1:1. Therefore, the colour filter mosaic comprises 8 green colour filters, 4 blue colour filters, and 4 red colour filters.

Furthermore, optionally, the green, blue and red colour filters of the colour filter mosaic are arranged in quad groups (namely, in 2x2 sub-mosaic groups). In such an instance a quad group of a given colour filter comprises 4 filters of the given colour, arranged as a 2x2 grid. Referring to the aforementioned example, the 16 colour filters of the colour filter mosaic M1 may be arranged in 4 quad groups Q1, Q2, Q3, and Q4. In such an instance, two quad groups, for example, such as the quad groups Q1 and Q3 may be quad groups of the green colour filter. Furthermore, the quad group Q2 may be a quad group of the red colour filter whereas the quad group Q4 may be a quad group of the blue colour filter.

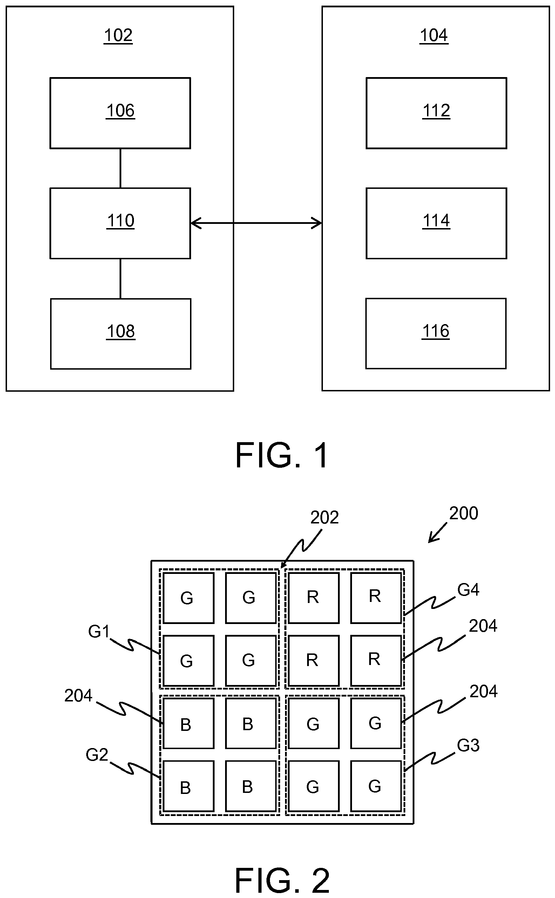

Moreover, optionally, the quad groups of the green, blue and red colour filters are arranged in a manner that the green colour filter quad groups occur at every other position along both orthogonal axes of the colour filter mosaic. In such an instance, the quad groups of the green, blue and red colour filters are arranged to form an interlaid array pattern of the colour filter mosaic, wherein one array position of the colour filter mosaic corresponds to one quad group of a given colour. Therefore, in such an interlaid array pattern, green colour filter quad groups occur at every other position (namely, at every alternate position) along both orthogonal axes of the colour filter mosaic. Furthermore, one such exemplary colour filter mosaic comprising quad groups of colour filters has been elucidated in conjunction with FIG. 2.

In an embodiment, the processor is implemented by way of hardware, software, firmware or a combination of these, suitable for controlling the operation of the at least one imaging sensor. Optionally, the processor of the imaging system is also configured to control operation of the display apparatus.

It will be appreciated that the captured at least one image of the real world environment is employed to produce the context and focus images for the display apparatus, wherein the produced context and focus images are employed to present the simulated environment to the user of the display apparatus.

In one implementation, the imaging system is implemented on the display apparatus. In such an instance, the at least one imaging sensor and the processor are mounted on the display apparatus. Furthermore, the at least one imaging sensor may be mounted, for example, on an outer surface of the display apparatus, such that the at least one imaging sensor faces the real world environment. Furthermore, in such an instance, the processor may be mounted, for example, on an inner surface of the display apparatus. Therefore, in such an implementation, the processor may be communicably coupled with the display apparatus by way of wires (namely, in a wired manner).

In another implementation, the imaging system is implemented on a portable electronic device. In such an instance, the portable electronic device is detachably attached and communicably coupled to the display apparatus. Optionally, the portable electronic device is mounted on (namely, attached to) the display apparatus. Therefore, the imaging system is configured to capture the at least one image and communicate the generated context and focus images to the display apparatus wirelessly or in a wired manner.

In yet another implementation, the imaging system is implemented on a remote device. In such an instance, the at least one imaging sensor and the processor are mounted on the remote device, and are therefore external to the display apparatus. Furthermore, in such an implementation, the remote device may be positioned within the real world environment whereas the user of the display apparatus may be positioned away from (namely, at a distance from) the remote device. Therefore, in such an implementation, the processor may be communicably coupled with the display apparatus wirelessly (namely, via a wireless interface). Optionally, the remote device is one of: a drone, a robot.

### Means for tracking gaze direction:

Throughout the present disclosure, the term *"means for tracking the gaze direction"* used herein relates to specialized equipment for detecting a direction of gaze of the user of the display apparatus. Furthermore, the means for tracking the gaze direction also allows for detecting movement of the eyes of the user. In such an instance, the means for tracking the gaze direction allows for tracking the gaze direction of the user when he/she views the at least one image. Beneficially, an accurate tracking of the gaze direction facilitates the display apparatus to closely implement gaze contingency thereon. The means for tracking the gaze direction may also be referred to as a *"means for detecting a gaze direction",* a *"gaze-tracking system",* or an *"eye-tracker".* Furthermore, the means for tracking the gaze direction may or may not be placed in contact with the eyes of the user, when the display apparatus is in use. Examples of the means for tracking the gaze direction include contact lenses with motion sensors, cameras monitoring position of pupil of the eye, and so forth. Such means for tracking the gaze direction are well known in the art.

As an example, the means for tracking the gaze direction may be employed to detect the gaze direction of the user when he/she views the at least one image. Such information indicative of the gaze direction allows for the imaging system to generate the context and focus images. Optionally, the display apparatus is configured to project the focus image on and around the fovea of the user's eyes and to project the context image on the retina of the user's eyes, of which the fovea is just a small part. Therefore, even upon a change in the gaze direction (namely, due to a movement of the user's eyes), the focus image could be projected on and around the fovea and the context image could be projected on the retina, for implementing active foveation in the display apparatus.

### Context and Focus Images:

It will be appreciated that the context image relates to a wide image of the real world environment, to be rendered and projected via the display apparatus. Furthermore, the focus image relates to another image depicting a part (namely, a portion) of the real world environment, to be rendered and projected via the display apparatus. Moreover, the focus image is dimensionally smaller than the context image. Furthermore, the context and focus images collectively constitute the visual scene upon optical combination thereof.

Optionally, an angular width of a projection of the rendered context image ranges from 40 degrees to 220 degrees. Furthermore, optionally, an angular width of a projection of the rendered focus image ranges from 5 degrees to 60 degrees. Throughout the present disclosure, the term *"angular width"* refers to an angular width of a given projection as seen from the user's eyes, when the display apparatus is worn by the user. It will be appreciated that the angular width of the projection of the focus image is smaller than the angular width of the projection of the context image, since the rendered focus image is typically projected on and around the fovea of the user's eyes, whereas the rendered context image is projected upon the retina of the user's eyes.

In some implementations, the angular width of the projection of the rendered context image may be, for example, 40, 50, 60, 70, 80, 90, 100, 110, 120, 130, 140, 150, 160, 170, 180, 190, 200, 210 or 220 degrees, whereas the angular width of the projection of the rendered focus image may be, for example, 5, 10, 15, 20, 25, 30, 35, 40, 45, 50, 55 or 60 degrees. It will be appreciated that the aforesaid angular widths of the context and focus images allow for coping with saccades and microsaccades associated with movement of the user's eyes.

In other implementations, the angular width of the projection of the rendered context image is greater than 220 degrees.

### Context and Focus Image Renderers:

Throughout the present disclosure, the term *"context image renderer"* used herein relates to equipment configured to facilitate rendering of the context image. Similarly, the term *"focus image renderer"* used herein relates to equipment configured to facilitate rendering of the focus image.

Optionally, the at least one context image renderer and/or the at least one focus image renderer are implemented by way of at least one projector and a projection screen associated therewith. Optionally, a single projection screen may be shared between separate projectors employed to implement the at least one context image renderer and the at least one focus image renderer. Optionally, the at least one projector is selected from the group consisting of: a Liquid Crystal Display (LCD)-based projector, a Light Emitting Diode (LED)-based projector, an Organic LED (OLED)-based projector, a Liquid Crystal on Silicon (LCoS)-based projector, a Digital Light Processing (DLP)-based projector, and a laser projector.

Optionally, the at least one context image renderer and/or the at least one focus image renderer is implemented by way of at least one display. Optionally, in this regard, the at least one context image renderer is implemented by way of at least one context display configured to emit the projection of the rendered context image therefrom, and the at least one focus image renderer is implemented by way of at least one focus display configured to emit the projection of the rendered focus image therefrom. In such a case, the term *"context display"* used herein relates to a display (or screen) configured to facilitate rendering of the context image thereon. Similarly, the term *"focus display"* used herein relates to a display (or screen) configured to facilitate rendering of the focus image thereon. Optionally, the at least one context display and/or the at least one focus display are selected from the group consisting of: a Liquid Crystal Display (LCD), a Light Emitting Diode (LED)-based display, an Organic LED (OLED)-based display, a micro OLED-based display, and a Liquid Crystal on Silicon (LCoS)-based display.

Furthermore, optionally, dimensions of the at least one context display are larger as compared to dimensions of the at least one focus display. Specifically, the at least one focus display may be much smaller in size than the at least one context display. Therefore, it will be appreciated that the at least one focus display may be moved easily as compared to the at least one context display.

Optionally, the at least one context image renderer is statically positioned and the at least one focus image renderer is movable for a desired projection of the rendered context and focus images. In such a case, the at least one focus image renderer may be moved to adjust a position of the projection of the rendered focus image. Alternatively, optionally, the at least one context image renderer and the at least one focus image renderer are exchanged positionally. In such an instance, the at least one context image renderer is movable and the at least one focus image renderer is statically positioned. Yet alternatively, optionally, both the at least one context image renderer and the at least one focus image renderer are movable.

The processor is configured to receive, from the display apparatus, the information indicative of the gaze direction of the user. It will be appreciated that such information is obtained by way of the means for tracking the gaze direction of the user, and thereafter, communicated from the display apparatus to the processor.

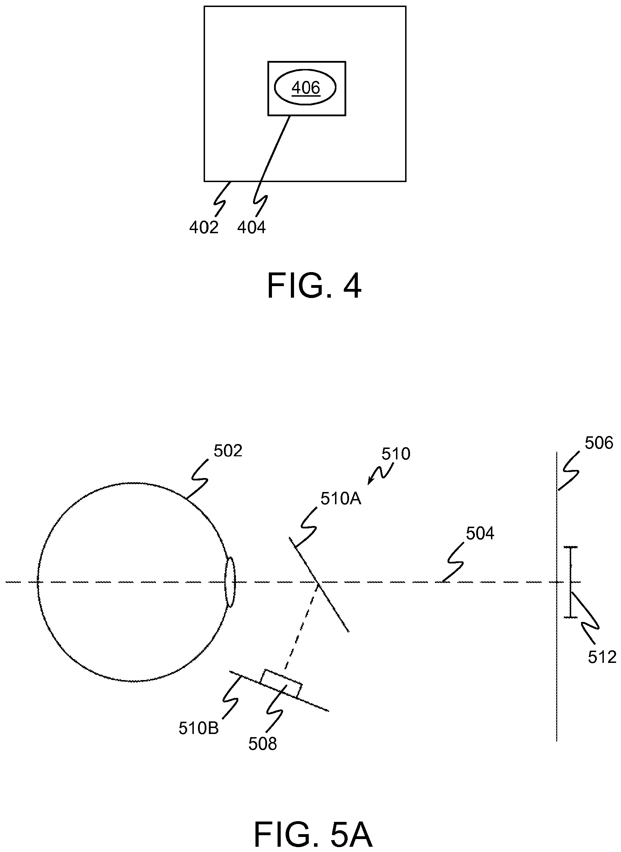

Furthermore, the processor is configured to determine the region of visual accuracy of the at least one image, based upon the gaze direction of the user. Throughout the present disclosure, the term *"region of visual accuracy"* relates to a region of the at least one image whereat the detected gaze direction of the user's eyes is directed (namely, focused) when the user of the display apparatus views the at least one image. In other words, the region of visual accuracy is a region of interest (namely, a fixation region) within the at least one image, and is to be projected onto the fovea of the user's eyes. Therefore, the region of visual accuracy is the region of focus of the user's gaze within the at least one image. Therefore, it will be appreciated that the region of visual accuracy relates to a region resolved to a much greater detail as compared to other regions of the at least one image, when the at least one image is viewed by a human visual system (namely, by the user's eyes). One such region of visual accuracy has been illustrated in conjunction with FIG. 4, as elucidated in detail below.

### Generation of Focus and Context Images:

Moreover, the processor is configured to process the at least one image to generate the context image and the focus image. The context image corresponds to a low-resolution representation of the at least one image. The context image includes the region of visual accuracy of the at least one image along with remaining region of the at least one image. The focus image substantially depicts the region of visual accuracy of the input image. Therefore, a size of the context image is larger than a size of the focus image, since the focus image corresponds to only a portion of the at least one image whereat the detected gaze direction of the eyes is focused (namely, at the region of visual accuracy of the input image).

It will be appreciated that the first and second resolutions are to be understood in terms of angular resolution. In other words, pixels per degree indicative of the second resolution are higher than pixels per degree indicative of the first resolution. As an example, the fovea of the eye of the user may correspond to 2 degrees of visual field and receive the projection of the focus image of angular cross section width equal to 114 pixels indicative of 57 pixels per degree. Therefore, an angular pixel size corresponding to the focus image would equal 2/114 or 0.017. Moreover, in such an example, the retina of the eye may correspond to 180 degrees of visual field and receive projection of the context image of angular cross section width equal to 2700 pixels indicative of 15 pixels per degree. Therefore, an angular pixel size corresponding to the context image would equal 180/2700 or 0.067. As calculated, the angular pixel size corresponding to the context image is clearly much larger than the angular pixel size corresponding to the focus image. However, a perceived angular resolution indicated by a total number of pixels is greater for the context image as compared to the focus image since the focus image corresponds to only a part of the context image, wherein the part corresponds to the region of visual accuracy of the input image.

The processor is configured to crop the at least one image to a predefined shape when generating the focus image. More optionally, the predefined shape is determined based upon a shape of the region of visual accuracy of the at least one image. The predefined shape include a circle, a polygon, and an ellipse. It will be appreciated that the aforesaid cropping of the at least one image beneficially allows for a reduction in size thereof, and consequently, a reduction in transmission bandwidth required to communicate the generated focus image to the display apparatus. As an example, a gaze direction of the user for an image of a real world beach environment may be detected to be towards a round ball lying on the beach. In such an instance, a region of visual accuracy of the image may be determined to be a circular shaped region including the ball.

Therefore, in such an instance, the processor may crop the image of the real world beach environment to a predefined shape, for example, such as a circle, while generating the focus image.

Furthermore, optionally, the processor is configured to perform sampling and readout of the plurality of photo sensors of the at least one imaging sensor while generating the context image. More optionally, the processor is configured to control sampling and readout circuitry of the at least one imaging sensor, to implement the aforesaid sampling and readout operation. It will be appreciated that in such an instance, each of the plurality of photo sensors of the at least one imaging sensor is sampled and read out to obtain full resolution output data from the at least one imaging sensor. Optionally, such full resolution output data from the at least one imaging sensor comprises a plurality of numbers indicative of the charge generated by the plurality of photo sensors of the at least one imaging sensor. Beneficially, such full resolution output data preserves all information (for example, such as wavelength information, exposure information, and the like) captured by the at least one imaging sensor to facilitate the generation of the context image.

Optionally, the processor is further configured to implement scaling of the at least one image while generating the context image. In such an instance, the at least one image is scaled up (namely, enlarged) or scaled down (namely, reduced) dimensionally while generating the context image. In an embodiment, the at least one image is scaled without changing a number of pixels of the at least one image. In another embodiment, the at least one image is scaled by adjusting the number of pixels of the at least one image. In such an embodiment, while scaling up the at least one image, the number of pixels of the at least one image are increased whereas while scaling down the at least one image, the number of pixels of the at least one image are decreased. Optionally, adjusting the number of pixels of the at least one image comprises employing an interpolation technique. Such an interpolation technique may also be referred to as *'demosaicing'.* Examples of the interpolation technique include, but are not limited to, nearest-neighbor interpolation, bilinear interpolation, bicubic interpolation, mipmap-based interpolation, fourier transform-based interpolation, and edge-directed interpolation.

Optionally, the processor is configured to bin pixels of the at least one image when generating the focus image and/or the context image. It will be appreciated that pixels of a given image correspond to the plurality of photo sensors of the at least one imaging sensor employed to capture the given image. Therefore, the pixels of the at least one image of the real world environment correspond to the plurality of photo sensors of the at least one imaging sensor. Optionally, in this regard, a number of the pixels of the captured at least one image is same as a number of the plurality of photo sensors of the at least one imaging sensor. Therefore, binning the pixels of the at least one image may be understood to be same as binning output data (namely, charge values) of plurality of photo sensors of the at least one imaging sensor. It will be appreciated that processor implements the aforesaid binning of the pixels of the at least one image, by combining the charge generated by the plurality of photo sensors of the at least one imaging sensor, in groups of four. In such a case, the charge generated by groups of four photo sensors is combined to generate a single resultant charge corresponding to each group. Consequently, the resultant charge values corresponding to each group of binned photo sensors of the at least one imaging sensor is sampled and read out to obtain cumulative binned output data from the at least one imaging sensor. Such cumulative binned output data comprises at least one number indicative of the resultant charge generated by at least one group of binned photo sensors of the at least one imaging sensor. Optionally, in this regard, the charge generated by four adjacent photo sensors is combined. In such an instance, the four adjacent photo sensors constitute a group of binned photo sensors, and generates the single resultant charge corresponding thereto. As an example, an imaging sensor IS1 may comprise 16 photo sensors P1-P16. In such an example, the processor may be configured to bin pixels of an image captured by the imaging sensor IS1, by combining charge generated by the photo sensors P1-P16 of the imaging sensor IS1, in groups of four. For example, charge from adjacent photo sensors P1-P4 may be combined to generate a resultant charge R1, charge from adjacent photo sensors P5-P8 may be combined to generate a resultant charge R2, charge from adjacent photo sensors P9-P12 may be combined to generate a resultant charge R3, and charge from adjacent photo sensors P13-P16 may be combined to generate a resultant charge R4.

Furthermore, optionally, binning the pixels of the at least one image comprises combining outputs of photo sensors corresponding to quad groups of the colour filter mosaic. In such an instance, the outputs (namely, charge values) of four photo sensors having a quad group of a given colour filter superposed thereon, are combined together to generate a resultant charge corresponding to the quad group of the given colour filter. Referring to the aforementioned example describing the imaging sensor IS1 comprising 16 photo sensors P1-P16, a colour filter mosaic M2 may be superposed on the 16 photo sensors P1-P16. In such an example, the colour filter mosaic M2 may comprise four quad groups G1-G4 of colour filters, wherein the quad groups G1, G2, G3, and G4 are quad groups of green colour filters, red colour filters, green colour filters, and blue colour filters respectively. In such an example, the quad group G1 may be superposed on the photo sensors P1-P4, the quad group G2 may be superposed on the photo sensors P5-P8, the quad group G3 may be superposed on the photo sensors P9-P12, and the quad group G4 may be superposed on the photo sensors P13-P16. Therefore, binning the pixels of the at least one image may comprise combining outputs of the photo sensors P1-P4, P5-P8, P9-P12, and P13-P16 corresponding to the quad groups G1, G2, G3, and G4 respectively, of the colour filter mosaic M2. Furthermore, in such an example, the aforesaid binning may generate resultant charges R1, R2, R3, and R4 corresponding to the quad groups G1, G2, G3, and G4.

It will be appreciated that the aforesaid binning operation allows for increasing frame rate of the at least one imaging sensor. Furthermore, such binning facilitates reduction of noise within the generated focus and/or context images, and consequently allows for improvement in signal to noise ratio within the focus and/or context images.

As mentioned previously, the processor is configured to communicate the generated context image and the generated focus image to the display apparatus. In such an instance, the processor communicates at least one data stream to the display apparatus wherein the at least one data stream comprises the generated focus image and the generated context image. In one implementation, the generated focus and context images are communicated to the display apparatus in a same data stream. It will be appreciated such an implementation allows for a reduction in transmission bandwidth required to communicate the generated focus and context images to the display apparatus. Consequently, such an implementation may be utilized to meet data throughput limitations of a communication network between the processor and the display apparatus. Furthermore, such an implementation may allow for a significant reduction in power consumption of the imaging system and required processing power for the processor. In another implementation, the generated focus and context images are communicated to the display apparatus in different data streams.

The system comprises means for adjusting an orientation of the at least one imaging sensor, wherein the display apparatus comprises means for tracking a head orientation of the user, and wherein the processor is configured to receive, from the display apparatus, information indicative of the head orientation of the user, and control the means for adjusting the orientation of the at least one imaging sensor, based upon the head orientation of the user. In such an instance, the orientation of the at least one imaging sensor is adjusted to allow for capturing the at least one image of the real world environment, from a perspective of the head orientation of the user. Such adjustment of the at least one imaging sensor beneficially accommodates for head movements of the user while he/she experiences the simulated environment using the display apparatus, thereby, enhancing realism within the simulated environment. It will be appreciated that such adjustment of the orientation of the at least one imaging sensor may be employed in the aforementioned implementation wherein the imaging system is implemented on the remote device. Examples of the means for tracking the head orientation of the user include, but are not limited to, a gyroscope, and an accelerometer.

Optionally, the means for adjusting the orientation of the at least one imaging sensor comprises at least one actuator. In an embodiment, the remote device is tilted and/or rotated by the aforesaid means for adjusting the orientation of the at least one imaging sensor mounted thereon. It will be appreciated that such an implementation may be beneficial when several imaging sensors are mounted on the remote device, as orientation of all the several imaging sensors may be adjusted collectively simply by tilting and/or rotating the remote device. In another embodiment, the at least one imaging sensor is tilted and/or rotated by the aforesaid means.

Furthermore, the at least one imaging sensor comprises at least one context imaging sensor per eye of the user and at least one focus imaging sensor per eye of the user, the at least one image comprising at least one first image captured by the at least one context imaging sensor and at least one second image captured by the at least one focus imaging sensor, wherein a field of view of the at least one focus imaging sensor is narrower than a field of view of the at least one context imaging sensor. In such an instance, the at least one first image captured by the at least one context imaging sensor is employed to generate the context image having the first resolution whereas the at least one second image captured by the at least one focus imaging sensor is employed to generate the focus image having the second resolution. It will be appreciated that pixels per degree of the at least one second image are higher than pixels per degree of the at least one first image owing to the different fields of view of the at least one focus imaging sensor and the at least one context imaging sensor. Furthermore, the field of view of the at least one focus imaging sensor is narrower than the field of view of the at least one context imaging sensor since the angular width of the projection of the rendered focus image is lesser than the angular width of the projection of the rendered context image.

Optionally, the at least one second image comprises a plurality of images. In such an instance, the plurality of images is employed for providing super resolution of the focus image, since the focus image substantially corresponds to the region of visual accuracy of the at least one image. It will be appreciated that the at least one second image used to generate the focus image substantially represents the region of visual accuracy of the at least one image.

Optionally, the processor is configured to actuate a direction of view of the at least one focus imaging sensor prior to capturing the at least one second image, based upon the gaze direction of the user. In such an instance, the at least one focus imaging sensor may be actuated to adjust the direction of view thereof. Such an adjustment allows the direction of view of the at least one focus imaging sensor to be same as the gaze direction of the user, thereby, allowing for the at least one focus imaging sensor to capture the at least one second image that depicts a region within the real world environment whereat the gaze of the user is focused. It will be appreciated that such a region substantially corresponds to the region of visual accuracy of the at least one image. Furthermore, the at least one focus imaging sensor may be actuated optically, electrically, mechanically, or by employing a combination thereof. In an example, a rotating mirror may be used to actuate the direction of view of the at least one focus imaging sensor. In another example, optical image stabilization systems may be used to actuate the direction of view of the at least one focus imaging sensor. In yet another example, two prisms may be used to actuate the direction of view of the at least one focus imaging sensor.

Additionally or alternatively, optionally, the processor is configured to crop the at least one second image to generate the focus image in a manner that the focus image substantially corresponds to the region of visual accuracy of the at least one second image. It will be appreciated that the aforesaid cropping of the at least one second image is based upon the gaze direction of the user.

Moreover, optionally, the imaging system further comprises at least one optical element for optically zooming into a region of visual accuracy of the at least one second image, the region of visual accuracy of the at least one second image being based upon the gaze direction of the user. In such an instance, the at least one optical element allows for increase in angular resolution (namely, pixels per degree field of view) of the region of visual accuracy of the at least one second image. Furthermore, such zooming operation allows for capturing the at least one second image from a wide field of view, thereby, allowing for increasing the angular resolution of the at least one second image to be superior to that of the human visual system. It is to be understood that the region of visual accuracy of the at least one second image relates to a region of the at least one second image whereat the detected gaze direction of the user's eyes may be focused. In one example, at least one aspheric lens is employed for implementing the aforesaid optical zooming operation. In another example, at least one parfocal lens is employed for implementing the aforesaid optical zooming operation.

The processor is configured to control the at least one context imaging sensor to employ at least two different exposures using a high dynamic range technique, wherein a longer exposure from amongst the at least two different exposures is employed for a region of visual accuracy of the at least one first image, the region of visual accuracy of the at least one first image being based upon the gaze direction of the user. It will be appreciated that the high dynamic range technique allows for extending the dynamic range of the at least one context imaging sensor in a manner that the at least one first image closely mimics an actual view of the real world environment, as seen by the human visual system. In such an instance, the region of visual accuracy of the at least one first image is generated by way of the longer exposure from amongst the at least two different exposures, so as to allow for capturing the region of visual accuracy at a higher resolution (namely, with a greater degree of detail) as compared to a remaining region of the at least one first image. It will be appreciated that such a technique may be employed so that the region of visual accuracy of the at least one first image, whereat the gaze of the user is focused, is resolved to a substantially good degree of detail. Optionally, in this regard, the processor is configured to bin pixels corresponding to the region of visual accuracy of the at least one first image when employing the high dynamic range technique.

It will be appreciated that the resolution of the region of visual accuracy of the at least one first image is substantially high, owing to the employment of the longer exposure to generate such region of visual accuracy. Optionally, in this regard, the processor is configured to employ the region of visual accuracy of the at least one first image to adjust the region of visual accuracy of the at least one second image. In an example, the processor may fill in (namely, replicate) details from pixels of the region of visual accuracy of the at least one first image into pixels of the region of visual accuracy of the at least one second image, if the pixels of the region of visual accuracy of the at least one second image are defective (namely, hot pixels, dead pixels, burnt pixels, and the like).

Optionally, the processor is configured to adjust a tone of the at least one first image with respect to a tone of the at least one second image. It will be appreciated that such adjustment in the tone of the at least one first image is implemented to allow for improvement in colour consistency and consequently, quality of the at least one first image with respect to the at least one second image. Such an adjustment in the tone of the at least one first image with respect to the tone of the at least one second image improves tonal consistency between the context and focus image to be generated using the at least one first and second images. Consequently, the simulated environment presented to the user of the display apparatus, by employing the generated context and focus images, appears to be highly realistic.

Furthermore, it will be appreciated that the processor of the imaging system is optionally implemented by way of a processor of the display apparatus. In an alternative implementation, the imaging system and the display apparatus have separate processors.

### Operation of Display Apparatus:

Optionally, the display apparatus comprises at least one optical combiner for optically combining the projection of the rendered context image with the projection of the rendered focus image to create the visual scene. Throughout the present disclosure, the term *"optical combiner"* used herein relates to equipment (for example, such as optical elements) for optically combining the projection of the rendered context image and the projection of the rendered focus image to constitute the rendered image. Beneficially, the at least one optical combiner could be configured to simulate active foveation of a human visual system.

Optionally, the processor of the display apparatus is configured to:
(a) receive the generated context image and the generated focus image from the imaging system;
(b) process the context image in a manner that a region of the context image that substantially corresponds to the region of visual accuracy of the at least one image is masked; and
(c) render the context image at the at least one context image renderer and the focus image at the at least one focus image renderer substantially simultaneously, whilst controlling the at least one optical combiner to combine the projection of the rendered context image with the projection of the rendered focus image in a manner that the projection of the rendered focus image substantially overlaps the projection of the masked region of the rendered context image.

It will be appreciated that the second resolution (of the focus image) is higher than the first resolution (of the context image) since the rendered focus image is typically projected by the display apparatus on and around the fovea of the user's eyes, whereas the rendered context image is projected by the display apparatus upon the retina of the user's eyes. Such resolution of the focus and context images allow for emulating visual characteristics of the human visual system when the visual scene is viewed by the user of the display apparatus.

Moreover, optionally, the region of visual accuracy of the at least one image is represented within both the rendered context image of low resolution and the rendered focus image of high resolution. Moreover, the rendered focus image having a high resolution may include more information pertaining to the region of visual accuracy of the at least one image, as compared to the rendered context image having a low resolution. Therefore, it will be appreciated that the processor of the display apparatus optionally masks the region of the context image that substantially corresponds to the region of visual accuracy of the at least one image in order to avoid optical distortion of the region of visual accuracy of the at least one image, when the projection of the focus image is optically combined with the projection of the rendered context image. As an example, pixels of the context image corresponding to the region of visual accuracy of the at least one image may be dimmed (namely, darkened) for masking.

Furthermore, optionally, the processor of the display apparatus is configured to mask the region of the context image corresponding to the region of visual accuracy of the at least one image in a manner that transitional area seams (or edges) between the region of visual accuracy of the at least one image and remaining region of the at least one image are reduced, for example minimized. In such an instance, the masking could be performed as a gradual gradation in order to reduce (for example, to minimize) transitional area seams between the superimposed context and focus images so that the displayed visual scene appears continuous. For example, the processor of the display apparatus may significantly dim pixels of the context image corresponding to the region of visual accuracy of the at least one image, and gradually reduce an amount of dimming of the pixels with an increase in distance thereof from the region of visual accuracy of the at least one image. Furthermore, the masking could be performed using linear transparency mask blend of inverse values between the context image and the focus image at the transition area, stealth (or camouflage) patterns containing shapes naturally difficult for detection by the eyes of the user, and so forth.

It will be appreciated that the context image and the focus image are rendered substantially simultaneously in order to avoid time lag during combination of projections thereof.

Optionally, the processor of the display apparatus is configured to implement image processing functions for at least one of: the at least one context image renderer, the at least one focus image renderer. In such an instance, the image processing functions are implemented prior to rendering the context image and the focus image, via the at least one context image renderer and the at least one focus image renderer, respectively. Beneficially, the implementation of such image processing functions allows for optimizing quality of the rendered context and focus images. Furthermore, the image processing functions are selected by taking into account properties of at least one of: the at least one context image renderer, the at least one focus image renderer, the at least one image to be displayed via the head-mounted display apparatus.

Optionally, the image processing functions for the at least one context image renderer comprise at least one function for optimizing perceived context image quality, the at least one function selected from the group comprising low pass filtering, colour processing, gamma correction, and edge processing to minimize perceived distortion on a boundary of combined projections of the rendered context and focus images.

Furthermore, optionally, the image processing functions for the at least one focus image renderer comprise at least one function for optimizing perceived focus image quality, the at least one function selected from the group comprising image cropping, image sharpening, colour processing, gamma correction, and edge processing to reduce, for example to minimize, perceived distortion on the boundary of combined projections of the rendered context and focus images.

### Optical combiner:

Optionally, the at least one optical combiner comprises at least one first optical element that is arranged for any of: allowing the projection of the rendered context image to pass through substantially, whilst reflecting the projection of the rendered focus image substantially; or allowing the projection of the rendered focus image to pass through substantially, whilst reflecting the projection of the rendered context image substantially. The at least one first optical element is arranged to combine optical paths of the projections of the rendered context and focus images. Beneficially, such an arrangement of the at least one first optical element facilitates projection of the rendered focus image on and around the fovea of the eye, and facilitates projection of the rendered context image on the retina of the eye, of which the fovea is just a small part.

Optionally, the at least one first optical element of the at least one optical combiner is implemented by way of at least one of: a semi-transparent mirror, a semi-transparent film, a prism, a polarizer, an optical waveguide. As an example, the at least one first optical element of the at least one optical combiner may be implemented as an optical waveguide. In such a case, the optical waveguide may be arranged to allow the projection of the rendered focus image to pass towards a field of vision of the eyes of the user by reflection therefrom, and the optical waveguide may be transparent such that the context image is visible therethrough. Therefore, the optical waveguide may be semi-transparent. Alternatively, the optical waveguide may be arranged to allow the projection of the rendered context image to pass towards the field of vision of the eyes of the user by reflection therefrom and the optical waveguide may be transparent such that the focus image is visible therethrough. Optionally, the optical waveguide further comprises optical elements therein (for example, such as microprisms, mirrors, diffractive optics, and so forth). Optionally, the optical waveguide is tiltable and/or movable.

Optionally, the at least one optical combiner comprises at least one first actuator for moving the at least one focus image renderer with respect to the at least one first optical element of the at least one optical combiner, wherein the processor of the display apparatus is configured to control the at least one first actuator to adjust a location of the projection of the rendered focus image on the at least one first optical element. In such an instance, the at least one first actuator is used to move the at least one focus image renderer when the gaze direction of the eye shifts from one direction to another. Upon such a shift in the gaze direction of the eye, the arrangement of the at least one optical combiner and the at least one focus image renderer may not project the rendered focus image on and around the fovea of the eye. Therefore, the processor of the display apparatus is configured to control the at least one first actuator to move the at least one focus image renderer with respect to the at least one first optical element, to adjust the location of the projection of the rendered focus image on the at least one first optical element such that the rendered focus image is projected on and around the fovea of the eye even upon occurrence of such a shift in the gaze direction. Optionally, the processor of the display apparatus is configured to control the at least one first actuator by generating an actuation signal (for example, such as an electric current, hydraulic pressure, and so forth).

In an example, the at least one first actuator may move the at least one focus image renderer closer or away from the at least one first optical element. In another example, the at least one first actuator may move the at least one focus image renderer laterally with respect to the at least one first optical element. In yet another example, the at least one first actuator may tilt and/or rotate the at least one focus image renderer with respect to the at least one first optical element.

Furthermore, optionally, the at least one optical combiner comprises at least one second optical element that is positioned on an optical path between the at least one first optical element and the at least one focus image renderer, and at least one second actuator for moving the at least one second optical element with respect to the at least one first optical element. Optionally, the at least one second optical element is selected from the group consisting of a lens, a prism, a mirror, and a beam splitter. Furthermore, in such an instance, the processor of the display apparatus is configured to control the at least one second actuator to adjust the location of the projection of the rendered focus image on the at least one first optical element. Consequently, actuation of the second optical element changes the optical path of the projection of the rendered focus image, thereby facilitating projection of the rendered focus image on and around the fovea of the eye even upon occurrence of a shift in the gaze direction. Optionally, the processor of the display apparatus is configured to control the at least one second actuator by generating an actuation signal (for example, such as an electric current, hydraulic pressure, and so forth).

For example, the at least one second optical element may be implemented by way of two prisms that are positioned on an optical path between a semi-transparent mirror (namely, the at least one second optical element) and the at least one focus image renderer. In such an example, the optical path of the projection of the rendered focus image may change upon passing through the two prisms to adjust the location of the projection of the rendered focus image on the semi-transparent mirror. Furthermore, the two prisms may be moved transversally and/or laterally, be rotated, be tilted, and so forth, by the at least one second actuator.

Optionally, the at least one optical combiner comprises at least one third actuator for moving the at least one first optical element, wherein the processor of the display apparatus is configured to control the at least one third actuator to adjust the location of the projection of the rendered focus image on the at least one first optical element. In such an instance, the at least one third actuator is used to move the at least one first optical element in order to facilitate projection of the rendered focus image on and around the fovea of the eye even upon occurrence of a shift in the gaze direction. Optionally, the processor of the display apparatus is configured to control the at least one third actuator by generating an actuation signal (for example, such as an electric current, hydraulic pressure, and so forth).

In an example, the at least one third actuator may move the at least one first optical element closer or away from the at least one focus image renderer. In another example, the at least one third actuator may move the at least one first optical element laterally with respect to the at least one focus image renderer. In yet another example, the at least one third actuator may tilt and/or rotate the at least one first optical element.

### Focusing lens:

Moreover, optionally, the display apparatus comprises at least one focusing lens that is positioned on the optical path between the at least one first optical element and the at least one focus image renderer, and at least one fourth actuator for moving the at least one focusing lens with respect to the at least one focus image renderer. In such an instance, the processor of the display apparatus is configured to control the at least one fourth actuator to adjust a focus of the projection of the rendered focus image. Furthermore, optionally, the at least one focusing lens utilizes specialized properties thereof to adjust a focus of the projection of the rendered focus image by changing the optical path thereof. Beneficially, the focus of the projection of the rendered focus image can be adjusted to accommodate for diopter tuning, astigmatism correction, and so forth. Optionally, the processor of the display apparatus is configured to control the at least one fourth actuator by generating an actuation signal (for example, such as an electric current, hydraulic pressure, and so forth).

Optionally, the processor of the display apparatus is configured to control at least one active optical characteristic of the at least one focusing lens by applying a control signal to the at least one focusing lens. Some examples of the at least one active optical characteristic include, but are not limited to, focal length and optical power. Furthermore, the control signal can be an electrical signal, hydraulic pressure, and so forth.

Optionally, the at least one focusing lens is a Liquid Crystal lens (LC lens).

Optionally, the at least one focusing lens is positioned on an optical path between the at least one first optical element and the at least one context image renderer.

Optionally, the physical size (or dimensions) of the at least one context image renderer and the at least one focus image renderer may not limit operation of the display apparatus described hereinabove. Optionally, physically small sized context image renderer and focus image renderer may be used along with a lens (for example, such as an enlarging lens, a collimating lens, and so forth) in the optical paths of the projections of the rendered context and/or focus images, such that desired sizes, desired optical paths and/or desired optical depths of the projections of the context and focus images are achieved. As an example, a lens (for example, such as a convex lens) may be positioned on the optical path of the projection of the rendered focus image, between the at least one focus image renderer and the at least one first optical element. As another example, a collimating lens may be positioned on the optical path of the projection of the rendered focus image, between the focus image renderer and the at least one first optical element, to allow for collimating the projection of the rendered focus image.

It will be appreciated that the imaging system pursuant to the present disclosure is not limited to its implementation with the aforementioned display apparatus comprising the at least one context image renderer and the at least one focus image renderer. The imaging system can be implemented with other types of display apparatuses (for example, such as display apparatuses having only one image renderer).

The present disclosure also relates to the method as described above. Various embodiments and variants disclosed above apply mutatis mutandis to the method. Optionally, the imaging system comprises means for adjusting an orientation of the at least one imaging sensor, and wherein the method further comprises:
- receiving, from the display apparatus, information indicative of a head orientation of the user; and
- controlling the means for adjusting the orientation of the at least one imaging sensor, based upon the head orientation of the user.

Furthermore, optionally, the method comprises binning pixels of the at least one image when generating the focus image and/or the context image.

The at least one imaging sensor comprises at least one context imaging sensor per eye of the user and at least one focus imaging sensor per eye of the user, the at least one image comprising at least one first image captured by the at least one context imaging sensor and at least one second image captured by the at least one focus imaging sensor, a field of view of the at least one focus imaging sensor being narrower than a field of view of the at least one context imaging sensor, and wherein the method further comprises actuating a direction of view of the at least one focus imaging sensor prior to capturing the at least one second image, based upon the gaze direction of the user.

Optionally, the method further comprises employing at least one optical element of the imaging system to optically zoom into a region of visual accuracy of the at least one second image, the region of visual accuracy of the at least one second image being based upon the gaze direction of the user.

The method further comprising controlling the at least one context imaging sensor to employ at least two different exposures using a high dynamic range technique, wherein a longer exposure from amongst the at least two different exposures is employed for a region of visual accuracy of the at least one first image, the region of visual accuracy of the at least one first image being based upon the gaze direction of the user.

### DETAILED DESCRIPTION OF THE DRAWINGS

Referring to FIG. 1, illustrated is a block diagram of architectures of an imaging system **102** and a display apparatus **104**, in accordance with an embodiment of the present disclosure. The imaging system **102** comprises at least one imaging sensor per eye of a user, depicted as imaging sensors **106-108**, and a processor **110** coupled to the at least one imaging sensor **106-108.** The processor **110** is configured to control the at least one imaging sensor **106-108** to capture at least one image of a real world environment. As an example, the imaging sensor **106** may be associated with a left eye of the user whereas the imaging sensor **108** may be associated with a right eye of the user. Furthermore, as shown in FIG. 1, the processor **110** is arranged to be communicably coupled with the display apparatus **104**. The display apparatus **104** is shown to comprise means for tracking a gaze direction **112** of the user, at least one context image renderer **114** for rendering a context image, and at least one focus image renderer **116** for rendering a focus image. The processor **110** is configured to receive, from the display apparatus **104**, information indicative of the gaze direction of the user, determine a region of visual accuracy of the at least one image, based upon the gaze direction of the user, process the at least one image to generate the context image and the focus image, and communicate the generated context image and the generated focus image to the display apparatus **104**.

Referring to FIG. 2, illustrated is a schematic illustration of an imaging sensor **200** (for example, such as an imaging sensor **106** of FIG. 1), in accordance with an embodiment of the present disclosure. Optionally, the imaging sensor **200** comprises a plurality of photo sensors (not shown) arranged in a grid-like manner. Furthermore, optionally, a colour filter mosaic **202** is superposed on the plurality of photo sensors of the imaging sensor **200**. More optionally, the colour filter mosaic **202** comprises a plurality of colour filters **204**, wherein one colour filter is superposed on one photo sensor of the imaging sensor **200**. Optionally, in this regard, the plurality of colour filters **204** comprises green colour filters, blue colour filters, and red colour filters in a ratio 2:1:1. Furthermore, optionally, the green, blue and red colour filters of the colour filter mosaic **202** are arranged in quads groups (namely, in 2x2 sub-mosaic groups). In the exemplary imaging sensor **200** depicted in FIG. 2, the colour filter mosaic **202** superposed on the 4x4 grid of photo sensors comprises 8 green colour filters depicted as 'G', 4 blue colour filters depicted as '**B**', and 4 red colour filters depicted as '**R**'. As shown, the green, blue and red colour filters are arranged in quads groups **G1**, **G2**, **G3**, and **G4**. In an example, at least one context imaging sensor per eye of a user may be implemented as the imaging sensor **200** of FIG. 2.

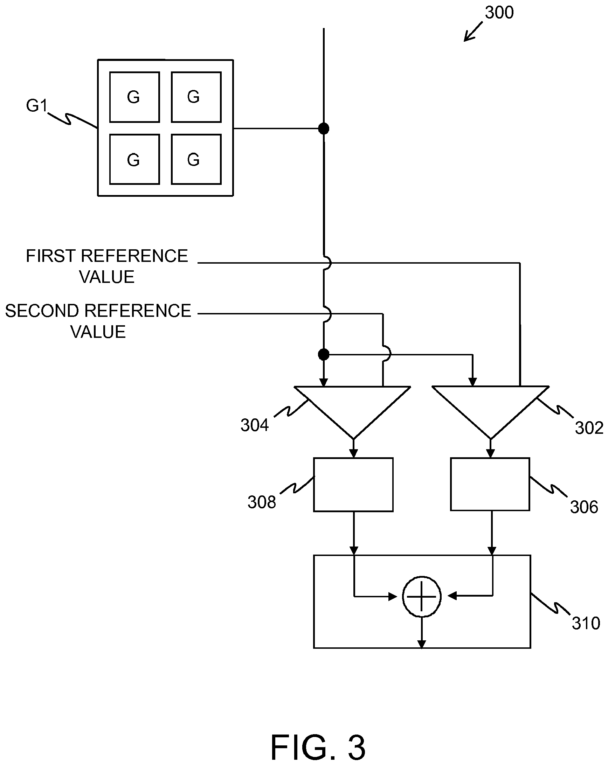

Referring to FIG. 3, illustrated is a schematic illustration of an exemplary sampling and readout circuitry **300** of the imaging sensor **200** shown in FIG. 2. The sampling and readout circuitry **300** depicted in FIG. 2 is employed for binning pixels of at least one image captured by the imaging sensor **200** by combining outputs of photo sensors corresponding to the quad group **G1** of green colour filters of the colour filter mosaic **202**. It will be appreciated that similar sampling and readout circuitry may be employed for combining outputs of photo sensors corresponding to the quad groups **G2**, **G3**, and **G4**. The sampling and readout circuitry **300** employs a Correlated Data Sampling (CDS) technique to implement the aforesaid binning operation. As shown, the sampling and readout circuitry **300** comprises two comparators **302** and **304** that compare combined output of the quad group **G1** with a first reference value and a second reference value respectively, two hybrid counters/latches **306** and **308**, and an averaging circuit **310**.

It may be understood by a person skilled in the art that the FIG. 3 includes a simplified sampling and readout circuitry **300** of the imaging sensor **200** for sake of clarity, which should not unduly limit the scope of the claims herein. The person skilled in the art will recognize many variations, alternatives, and modifications of embodiments of the present disclosure.

Referring to FIG. 4, illustrated is an exemplary representation of a context image **402** and a focus image **404** to be presented via a display apparatus (for example, such as the display apparatus **104** of FIG. 1), in accordance with an embodiment of the present disclosure. The context image **402** is rendered by at least one context image renderer (for example, such as the at least one context image renderer **114** of FIG. 1), whereas the focus image **404** is rendered by at least one focus image renderer (for example, such as the at least one focus image renderer **116** of FIG. 1). As shown, an angular dimension (namely, an angular width) of the context image **402** is larger as compared to an angular dimension of the focus image **404**. Furthermore, the focus image **404** substantially corresponds to a region of visual accuracy **406** of at least one image whereat a gaze direction of a user of the display apparatus is focused.

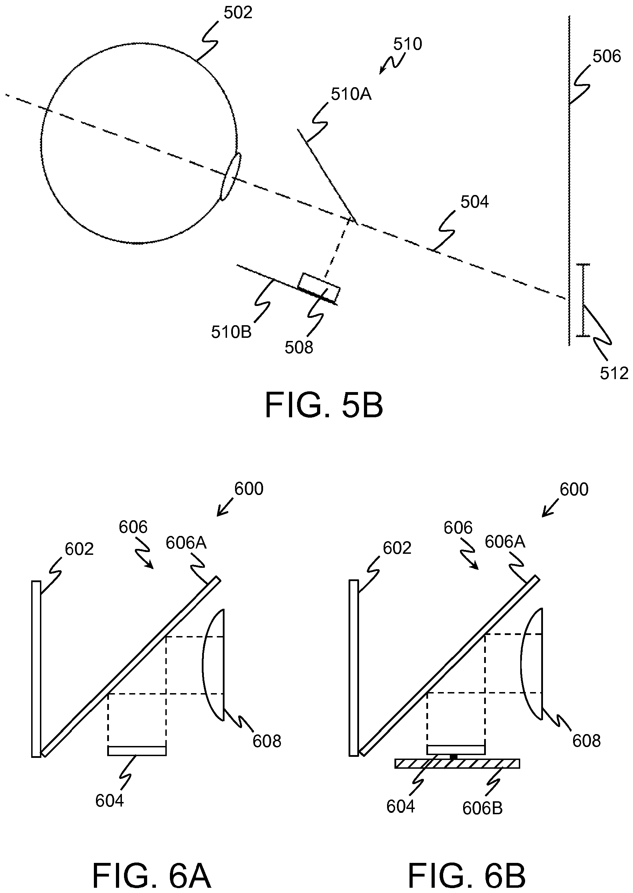

Referring to FIGs. 5A and 5B, illustrated is an exemplary operation of a display apparatus (for example, such as the display apparatus **104** of FIG. 1) with respect to an eye **502** of a user, in accordance with an embodiment of the present disclosure. As shown, a gaze direction of the eye **502** is substantially towards a front side of the user, for example straight in front of the user. Furthermore, a line of sight **504** represents a gaze direction of the eye **502.**

In FIGs. 5A and 5B, there are also shown at least one context image renderer **506**, and at least one focus image renderer **508.** Furthermore the display apparatus is shown to optionally include at least one optical combiner **510.** Optionally, in this regard, the at least one optical combiner **510** includes at least one first optical element **510A** and at least one first actuator **510B**. In operation, the at least one context image renderer **506** projects a context image onto the eye **502**, while the at least one focus image rederer **508** projects a focus image onto the at least one first optical element **510A** that is arranged for allowing the projection of the rendered context image to pass through substantially, whilst reflecting the projection of the rendered focus image substantially towards the eye **402**. It will be appreciated that the at least one optical combiner **510** is arranged such that the projection of the context image is optically combined with the projection of the focus image in a manner that the projection of the focus image substantially overlaps the projection of a masked region **512** of the context image. As shown, the masked region **512** is a portion of the at least one context image renderer **506** that is optionally dimmed while projecting the context image onto the eye **502** to avoid distortion between the projections of the focus and context images.

Furthermore, the at least one first actuator **510B** is operable to adjust a location of the projection of the rendered focus image on the at least one first optical element **510A**. A processor (not shown) of the display apparatus is configured to control the at least one first actuator **510B** to move the at least one focus image renderer **508** with respect to the at least one first optical element **510A** of the at least one optical combiner **510**.

Next, FIG. 5B depicts a sideways shift in the gaze direction of the eye **502**, as compared to FIG. 5A. As shown, to compensate for the shift in the gaze direction, the at least one focus image renderer **508** is moved sideways with respect to the at least one first optical element **510A** by the at least one first actuator **510B** to continue projection of the focus image onto the fovea of the eye **502**. Therefore, the masked region **512** on the at least one context image renderer **506** is also moved to accommodate for such a shift in the gaze direction.

Referring to FIGs. 6A-6I, illustrated are exemplary implementations of a display apparatus **600**, in accordance with various embodiments of the present disclosure. It may be understood by a person skilled in the art that FIGs. 6A-6I include simplified arrangements for the implementation of the display apparatus **600** for the sake of clarity only, which should not unduly limit the scope of the claims herein. The person skilled in the art will recognize many variations, alternatives, and modifications of embodiments of the present disclosure.

Referring to FIG. 6A, illustrated is an exemplary implementation of a display apparatus **600**, in accordance with an embodiment of the present disclosure. The display apparatus **600** is shown to include at least one context image renderer, depicted as a context image renderer **602**, and at least one focus image renderer, depicted as a focus image renderer **604** of a display apparatus. The display apparatus 600 is also shown to optionally include at least one optical combiner, depicted as an optical combiner **606**. In operation, a processor (not shown) of the display apparatus is configured to render a context image at the context image renderer **602** and a focus image at the focus image renderer **604**. The optical combiner **606** is operable to optically combine a projection of the rendered context image with a projection of the rendered focus image to create a visual scene, as described earlier. Furthermore, a lens **608** is positioned on an optical path of the projections of the context and focus images.

With reference to FIGs. 6A-H, the optical combiner **606** optionally comprises at least one first optical element **606A** (depicted as a semi-transparent mirror).

Referring to FIG. 6B, the optical combiner **606** optionally comprises at least one first actuator **606B** for moving the focus image renderer **604** with respect to the first optical element **606A**, so as to adjust a location of the projection of the rendered focus image on the first optical element **606A**.

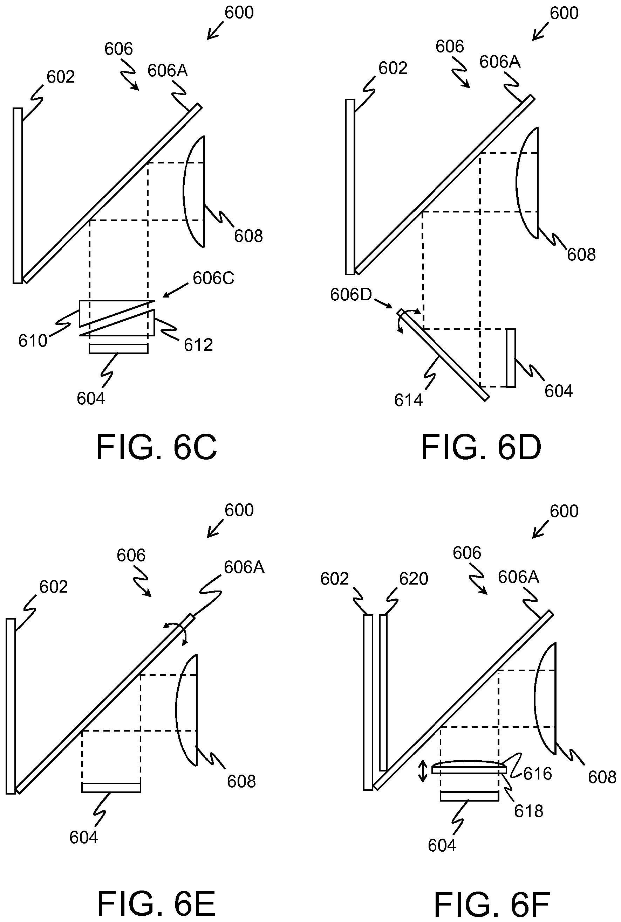

Referring to FIGs. 6C and 6D, the optical combiner **606** optionally comprises at least one second optical element (depicted as elements **606C** and **606D** in FIGs. 6C and 6D, respectively), wherein at least one second actuator (not shown) is controllable to move the at least one second optical element with respect to the first optical element **606A**. In FIG. 6C, the at least one second optical element **606C** is implemented by way of two prisms **610** and **612**. In FIG. 6D, the at least one second optical element **606D** is implemented by way of a mirror **614**.

Referring to FIG. 6E, at least one third actuator (not shown) is controllable to move the first optical element **606A**. As an example, the at least one third actuator rotates the first optical element **606A** about at least one axis.

Referring to FIG. 6F, the display apparatus optionally comprises at least one focusing lens (depicted as a focusing lens **616**) that is positioned on an optical path between the first optical element **606A** and the focus image renderer **604**, and at least one fourth actuator **618** for moving the focusing lens **616** with respect to the focus image renderer **604**. The processor of the display apparatus is configured to control the at least one fourth actuator **618** to adjust a focus of the projection of the rendered focus image.

Moreover, optionally, the display apparatus comprises an additional lens **620** positioned on an optical path between the context image renderer **602** and the first optical element **606A.** In such an implementation, the focus image renderer **604** need not be moved for adjusting the projection of the rendered focus image, since a lens subsystem formed by the focusing lens **616** and the lens **620** can be used to adjust the optical path and/or focus of the projections of the rendered focus image and/or the context image.

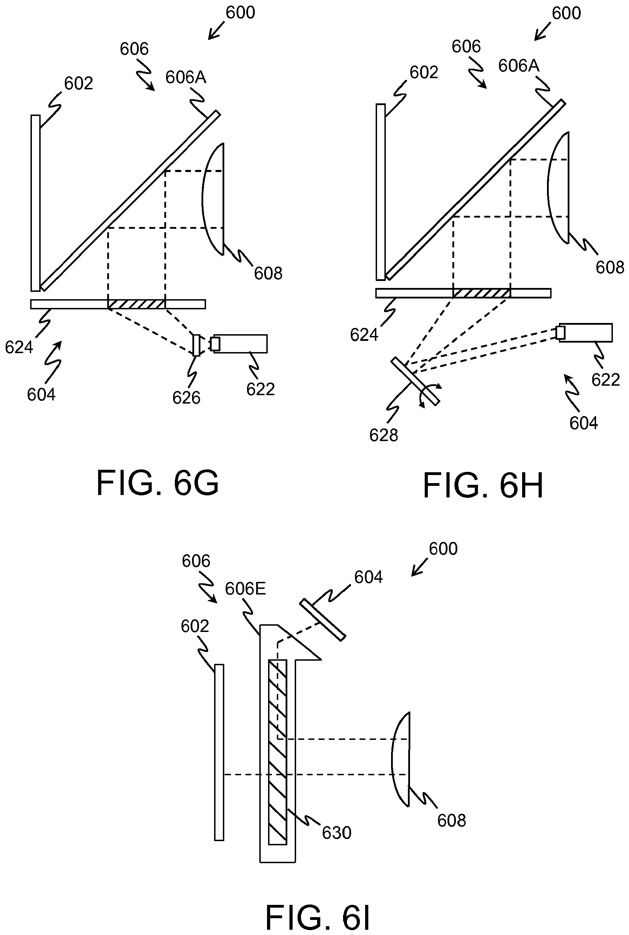

Referring to FIGs. 6G and 6H, the focus image renderer **604** is optionally implemented by way of at least one projector (depicted as a projector **622**) and at least one projection screen (depicted as a projection screen **624**). In FIG. 6G, optionally, a prism **626** is positioned in an optical path between the at least one projector **622** and the at least one projection screen **624**. In FIG. 6H, optionally, a rotatable mirror **628** is positioned in an optical path between the projector **622** and the projection screen **624**.

It will be appreciated that the prism **626** and the rotatable mirror **628** of FIGs. 6G and 6H, respectively, allow for adjusting the location of the projection of the focus image on the at least one projection screen **624**.

Referring to FIG. 6I, the at least one first optical element is implemented by way of an optical waveguide **606E**. Furthermore, as shown, the optical waveguide **606E** comprises optical components **630**, for example, such as microprisms, mirrors, diffractive optics, and so forth.

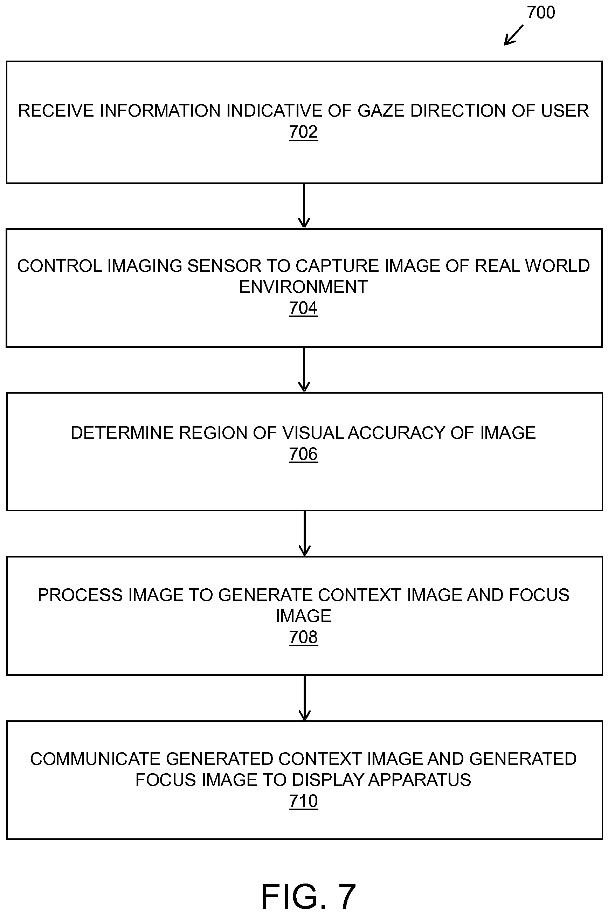

Referring to FIG. 7, illustrated are steps of a method **700** of producing a context image and a focus image for a display apparatus, via an imaging system. At step **702**, information indicative of a gaze direction of the user is received from the display apparatus. At step **704**, the at least one imaging sensor is controlled to capture at least one image of a real world environment. At step **706**, a region of visual accuracy of the at least one image is determined, based upon the gaze direction of the user. At step **708,** the at least one image is processed to generate the context image and the focus image. The context image has a first resolution and the focus image having a second resolution. The second resolution is higher than the first resolution. Furthermore, the processing of the at least one image comprises cropping the at least one image to generate the focus image in a manner that the focus image substantially corresponds to the region of visual accuracy of the at least one image. At step **710**, the generated context image and the generated focus image are communicated to the display apparatus.

The steps **702** to **710** are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system comprising:
an imaging system (102) comprising:
- at least one imaging sensor (106, 108, 200) per eye of a user; and
- a processor (110) coupled to the at least one imaging sensor, the processor being configured to control the at least one imaging sensor to capture at least one image of a real world environment;
the system further comprising:
- a display apparatus (104), comprising means (112) for tracking a gaze direction of the user, at least one context image renderer (114, 506) for rendering a context image (402), at least one focus image renderer (116, 508) for rendering a focus image (404), and an optical combiner (510),
wherein the processor (110) is communicably coupled with the display apparatus (102), and
wherein the processor (110) is configured to:
- receive, from the display apparatus, information indicative of the gaze direction of the user;
- determine a region of visual accuracy (406) of the at least one image of the real world environment, based upon the gaze direction of the user;
- process the at least one image to generate the context image and the focus image, the context image having a first resolution and the focus image having a second resolution, the second resolution being higher than the first resolution, wherein, when processing the at least one image of the real world environment, the processor (110) is configured to crop the at least one image to generate the focus image in a manner that the focus image substantially corresponds to the region of visual accuracy of the at least one image of the real world environment;
and
- communicate the generated context image and the generated focus image to the display apparatus,
wherein the optical combiner (510) of the display apparatus is operable to optically combine a projection of the rendered context image and a projection of the rendered focus image;
further the imaging system (102) comprising means for adjusting an orientation of the at least one imaging sensor, wherein the display apparatus comprises means for tracking a head orientation of the user, and wherein the processor is configured to:
- receive, from the display apparatus, information indicative of the head orientation of the user;
- control the means for adjusting the orientation of the at least one imaging sensor, based upon the head orientation of the user; and
- crop the at least one image of the real world environment to a predefined shape when generating the focus image,
wherein the predefined shape is selected from a circle, a polygon, and an ellipse,
wherein the at least one imaging sensor (106, 108, 200) comprises at least one context imaging sensor per eye of the user and at least one focus imaging sensor per eye of the user, the at least one image of the real world environment comprising at least one first
image captured by the at least one context imaging sensor and at least one second image captured by the at least one focus imaging sensor, wherein a field of view of the at least one focus imaging sensor is narrower than a field of view of the at least one context imaging sensor,
**characterised in that** the processor (110) is configured to control the at least one context imaging sensor to employ at least two different exposures using a high dynamic range technique, wherein a longer exposure from amongst the at least two different exposures is employed for the region of visual accuracy (406) of the at least one first image (402, 506), the region of visual accuracy (406) of the at least one first image (402, 506) being based upon the gaze direction of the user.

2. The system of claim 1, wherein the processor is configured to bin pixels of the at least one image when generating the focus image and/or the context image.

3. The system of any of the preceding claims, wherein the processor is configured to actuate a direction of view of the at least one focus imaging sensor prior to capturing the at least one second image, based upon the gaze direction of the user.

4. The system of any of the preceding claims, further comprising at least one optical element for optically zooming into a region of visual accuracy of the at least one second image, the region of visual accuracy of the at least one second image being based upon the gaze direction of the user.

5. The system of claim 4, wherein the processor is configured to adjust a tone of the at least one first image with respect to a tone of the at least one second image.

6. A method of producing a context image and a focus image for a display apparatus (104), via an imaging system (102) comprising at least one imaging sensor (106, 108, 200) per eye of a user and a processor (110), the imaging system being communicably coupled with the display apparatus, the method comprising:
- receiving, from the display apparatus, information indicative of a gaze direction of the user;
- controlling the at least one imaging sensor to capture at least one image of a real world environment;
- determining a region of visual accuracy of the at least one image, based upon the gaze direction of the user;
- processing the at least one image to generate the context image and the focus image, the context image having a first resolution and the focus image having a second resolution, the second resolution being higher than the first resolution, wherein the processing of the at least one image comprises cropping the at least one image to generate the focus image in a manner that the focus image substantially corresponds to the region of visual accuracy of the at least one image;
- communicating the generated context image and the generated focus image to the display apparatus; and
- optically combining a projection of the generated context image and a projection of the generated focus image for display;
wherein the imaging system comprises means for adjusting an orientation of the at least one imaging sensor, and wherein the method further comprises:
- receiving, from the display apparatus, information indicative of a head orientation of the user;
- controlling the means for adjusting the orientation of the at least one imaging sensor, based upon the head orientation of the user; and
- cropping the at least one image to a predefined shape when generating the focus image,
wherein the predefined shape is selected from a circle, a polygon, and an ellipse,
wherein the at least one imaging sensor comprises at least one context imaging sensor per eye of the user and at least one focus imaging sensor per eye of the user, the at least one image comprising at least one first image captured by the at least one context imaging sensor and at least one second image captured by the at least one focus imaging sensor, a field of view of the at least one focus imaging sensor being narrower than a field of view of the at least one context imaging sensor, and wherein the method further comprises actuating a direction of view of the at least one focus imaging sensor prior to capturing the at least one second image, based upon the gaze direction of the user,
**characterised in that** the method further comprises controlling the at least one context imaging sensor to employ at least two different exposures using a high dynamic range technique, wherein a longer exposure from amongst the at least two different exposures is employed for a region of visual accuracy of the at least one first image, the region of visual accuracy of the at least one first image being based upon the gaze direction of the user.

7. The method of claim 6, further comprising binning pixels of the at least one image when generating the focus image and/or the context image.

8. The method of any of the preceding claims, further comprising employing at least one optical element of the imaging system to optically zoom into a region of visual accuracy of the at least one second image, the region of visual accuracy of the at least one second image being based upon the gaze direction of the user.

## Patentansprüche

1. System, umfassend:
ein Bildgebungssystem (102), umfassend:
- mindestens einen Bildgebungssensor (106, 108, 200) pro Auge eines Benutzers; und
- einen Prozessor (110), der mit dem mindestens einen Bildgebungssensor gekoppelt ist, wobei der Prozessor konfiguriert ist, um den mindestens einen Bildgebungssensor zu steuern, um mindestens ein Bild einer realen Umgebung aufzunehmen;
das System ferner umfassend:
- eine Anzeigevorrichtung (104), umfassend ein Mittel (112) zum Verfolgen einer Blickrichtung des Benutzers, mindestens einen Kontextbild-Renderer (114, 506) zum Rendern eines Kontextbilds (402), mindestens einen Fokusbild-Renderer (116, 508) zum Rendern eines Fokusbilds (404) und einen optischen Kombinator (510),
wobei der Prozessor (110) mit der Anzeigevorrichtung (102) kommunikativ gekoppelt ist und
wobei der Prozessor (110) konfiguriert ist zum:
- Empfangen, von der Anzeigevorrichtung, von Informationen, die die Blickrichtung des Benutzers angeben;
- Bestimmen eines Bereichs visueller Genauigkeit (406) des mindestens einen Bilds der realen Umgebung, basierend auf der Blickrichtung des Benutzers;
- Verarbeiten des mindestens einen Bilds, um das Kontextbild und das Fokusbild zu erzeugen, wobei das Kontextbild eine erste Auflösung aufweist und das Fokusbild eine zweite Auflösung aufweist, wobei die zweite Auflösung höher als die erste Auflösung ist, wobei, wenn das mindestens eine Bild der realen Umgebung verarbeitet wird, der Prozessor (110) konfiguriert ist, um das mindestens eine Bild zuzuschneiden, um das Fokusbild in einer Weise zu erzeugen, dass das Fokusbild im Wesentlichen dem Bereich visueller Genauigkeit des mindestens einen Bilds der realen Umgebung entspricht; und
- Kommunizieren des erzeugten Kontextbilds und des erzeugten Fokusbilds an die Anzeigevorrichtung,
wobei der optische Kombinator (510) der Anzeigevorrichtung betriebsfähig ist, um eine Projektion des gerenderten Kontextbilds und eine Projektion des gerenderten Fokusbilds optisch zu kombinieren;
das Bildgebungssystem (102) ferner umfassend ein Mittel zum Anpassen einer Ausrichtung des mindestens einen Bildgebungssensors, wobei die Anzeigevorrichtung ein Mittel zum Verfolgen einer Kopfausrichtung des Benutzers umfasst und wobei der Prozessor konfiguriert ist zum:
- Empfangen, von der Anzeigevorrichtung, von Informationen, die die Kopfausrichtung des Benutzers angeben;
- Steuern des Mittels zum Anpassen der Ausrichtung des mindestens einen Bildgebungssensors, basierend auf der Kopfausrichtung des Benutzers; und
- Zuschneiden des mindestens einen Bilds der realen Umgebung auf eine vordefinierte Form, wenn das Fokusbild erzeugt wird,
wobei die vordefinierte Form aus einem Kreis, einem Polygon und einer Ellipse ausgewählt ist,
wobei der mindestens eine Bildgebungssensor (106, 108, 200) mindestens einen Kontextbildgebungssensor pro Auge des Benutzers und mindestens einen Fokusbildgebungssensor pro Auge des Benutzers umfasst, das mindestens eine Bild der realen Umgebung umfassend mindestens ein erstes Bild, das durch den mindestens einen Kontextbildgebungssensor aufgenommen wird, und mindestens ein zweites Bild, das durch den mindestens einen Fokusbildgebungssensor aufgenommen wird, wobei ein Sichtfeld des mindestens einen Fokusbildgebungssensors schmaler als ein Sichtfeld des mindestens einen Kontextbildgebungssensors ist,
**dadurch gekennzeichnet, dass** der Prozessor (110) konfiguriert ist, um den mindestens einen Kontextbildgebungssensor zu steuern, um unter Verwendung einer Hochkontrasttechnik mindestens zwei unterschiedliche Belichtungen einzusetzen, wobei für den Bereich visueller Genauigkeit (406) des mindestens einen ersten Bilds (402, 506) eine längere Belichtung unter den mindestens zwei unterschiedlichen Belichtungen eingesetzt wird, wobei der Bereich visueller Genauigkeit (406) des mindestens einen ersten Bilds (402, 506) auf der Blickrichtung des Benutzers basiert.

2. System nach Anspruch 1, wobei der Prozessor konfiguriert ist, um Pixel des mindestens einen Bilds zu binnen, wenn das Fokusbild und/oder das Kontextbild erzeugt werden.

3. System nach einem der vorstehenden Ansprüche, wobei der Prozessor konfiguriert ist, um eine Sichtrichtung des mindestens einen Fokusbildgebungssensors vor einem Aufnehmen des mindestens einen zweiten Bilds, basierend auf der Blickrichtung des Benutzers, auszulösen.

4. System nach einem der vorstehenden Ansprüche, ferner umfassend mindestens ein optisches Element zum optischen Zoomen in einen Bereich visueller Genauigkeit des mindestens einen zweiten Bilds, wobei der Bereich visueller Genauigkeit des mindestens einen zweiten Bilds auf der Blickrichtung des Benutzers basiert.

5. System nach Anspruch 4, wobei der Prozessor konfiguriert ist, um einen Ton des mindestens einen ersten Bilds in Bezug auf einen Ton des mindestens einen zweiten Bilds anzupassen.

6. Verfahren zum Produzieren eines Kontextbilds und eines Fokusbilds für eine Anzeigevorrichtung (104), über ein Bildgebungssystem (102), umfassend mindestens einen Bildgebungssensor (106, 108, 200) pro Auge eines Benutzers und einen Prozessor (110), wobei das Bildgebungssystem mit der Anzeigevorrichtung kommunikativ gekoppelt ist, das Verfahren umfassend:
- Empfangen, von der Anzeigevorrichtung, von Informationen, die eine Blickrichtung des Benutzers angeben;
- Steuern des mindestens einen Bildgebungssensors, um mindestens ein Bild einer realen Umgebung aufzunehmen;
- Bestimmen eines Bereichs visueller Genauigkeit des mindestens einen Bilds, basierend auf der Blickrichtung des Benutzers;
- Verarbeiten des mindestens einen Bilds, um das Kontextbild und das Fokusbild zu erzeugen, wobei das Kontextbild eine erste Auflösung aufweist und das Fokusbild eine zweite Auflösung aufweist, wobei die zweite Auflösung höher als die erste Auflösung ist, wobei das Verarbeiten des mindestens einen Bilds das Zuschneiden des mindestens einen Bilds umfasst, um das Fokusbild in einer Weise zu erzeugen, dass das Fokusbild im Wesentlichen dem Bereich visueller Genauigkeit des mindestens einen Bilds entspricht;
- Kommunizieren des erzeugten Kontextbilds und des erzeugten Fokusbilds an die Anzeigevorrichtung; und
- optisches Kombinieren einer Projektion des erzeugten Kontextbilds und einer Projektion des erzeugten Fokusbilds für eine Anzeige;
wobei das Bildgebungssystem das Mittel zum Anpassen einer Ausrichtung des mindestens einen Bildgebungssensors umfasst, und wobei das Verfahren ferner umfasst:
- Empfangen, von der Anzeigevorrichtung, von Informationen, die eine Kopfausrichtung des Benutzers angeben;
- Steuern des Mittels zum Anpassen der Ausrichtung des mindestens einen Bildgebungssensors, basierend auf der Kopfausrichtung des Benutzers; und
- Zuschneiden des mindestens einen Bilds auf eine vordefinierte Form, wenn das Fokusbild erzeugt wird,
wobei die vordefinierte Form aus einem Kreis, einem Polygon und einer Ellipse ausgewählt ist,
wobei der mindestens eine Bildgebungssensor mindestens einen Kontextbildgebungssensor pro Auge des Benutzers und mindestens einen Fokusbildgebungssensor pro Auge des Benutzers umfasst, das mindestens eine Bild umfassend mindestens ein erstes Bild, das durch den mindestens einen Kontextbildgebungssensor aufgenommen wird, und mindestens ein zweites Bild, das durch den mindestens einen Fokusbildgebungssensor aufgenommen wird, wobei ein Sichtfeld des mindestens einen Fokusbildgebungssensors schmaler als ein Sichtfeld des mindestens einen Kontextbildgebungssensors ist und wobei das Verfahren ferner ein Auslösen einer Sichtrichtung des mindestens einen Fokusbildgebungssensors vor dem Aufnehmen des mindestens einen zweiten Bilds umfasst, basierend auf der Blickrichtung des Benutzers,
**dadurch gekennzeichnet, dass** das Verfahren ferner ein Steuern des mindestens einen Kontextbildgebungssensors umfasst, um mindestens zwei unterschiedliche Belichtungen unter Verwendung einer Hochkontrasttechnik einzusetzen, wobei eine längere Belichtung unter den mindestens zwei unterschiedlichen Belichtungen für einen Bereich visueller Genauigkeit des mindestens einen ersten Bilds eingesetzt wird, wobei der Bereich visueller Genauigkeit des mindestens einen ersten Bilds auf der Blickrichtung des Benutzers basiert.

7. Verfahren nach Anspruch 6, ferner umfassend ein Binnen von Pixeln des mindestens einen Bilds, wenn das Fokusbild und/oder das Kontextbild erzeugt wird.

8. Verfahren nach einem der vorstehenden Ansprüche, ferner umfassend ein Einsetzen mindestens eines optischen Elements des Bildgebungssystems, um in einen Bereich visueller Genauigkeit des mindestens einen zweiten Bilds optisch zu zoomen, wobei der Bereich visueller Genauigkeit des mindestens einen zweiten Bilds auf der Blickrichtung des Benutzers basiert.

## Revendications

1. Système comprenant :
un système d'imagerie (102) comprenant :
- au moins un capteur d'imagerie (106, 108, 200) par oeil d'un utilisateur ; et
- un processeur (110) couplé à l'au moins un capteur d'imagerie, le processeur étant configuré pour commander l'au moins un capteur d'imagerie afin de capturer au moins une image d'un environnement du monde réel ;
le système comprenant en outre :
- un appareil d'affichage (104), comprenant un moyen (112) pour suivre une direction du regard de l'utilisateur, au moins un dispositif de rendu d'image de contexte (114, 506) pour rendre une image de contexte (402), au moins un dispositif de rendu d'image de mise au point (116, 508) pour rendre une image de mise au point (404), et un combinateur optique (510),
dans lequel le processeur (110) est couplé en communication avec l'appareil d'affichage (102), et
dans lequel le processeur (110) est configuré pour :
- recevoir, à partir de l'appareil d'affichage, des informations indiquant la direction du regard de l'utilisateur ;
- déterminer une région de précision visuelle (406) de l'au moins une image de l'environnement du monde réel, sur la base de la direction du regard de l'utilisateur ;
- traiter l'au moins une image pour générer l'image de contexte et l'image de mise au point, l'image de contexte ayant une première résolution et l'image de mise au point ayant une seconde résolution, la seconde résolution étant supérieure à la première résolution, dans lequel, lors du traitement de l'au moins une image de l'environnement du monde réel, le processeur (110) est configuré pour recadrer l'au moins une image afin de générer l'image de mise au point de manière à ce que l'image de mise au point corresponde sensiblement à la région de précision visuelle de l'au moins une image de l'environnement du monde réel ; et
- communiquer l'image de contexte générée et l'image de mise au point générée à l'appareil d'affichage,
dans lequel le combinateur optique (510) de l'appareil d'affichage peut combiner optiquement une projection de l'image de contexte rendue et une projection de l'image de mise au point rendue ;
le système d'imagerie (102) comprenant en outre un moyen pour ajuster une orientation de l'au moins un capteur d'imagerie, dans lequel l'appareil d'affichage comprend un moyen pour suivre une orientation de la tête de l'utilisateur, et dans lequel le processeur est configuré pour :
- recevoir, à partir de l'appareil d'affichage, des informations indiquant l'orientation de la tête de l'utilisateur ;
- commander le moyen pour ajuster l'orientation de l'au moins un capteur d'imagerie sur la base de l'orientation de la tête de l'utilisateur ; et
- recadrer l'au moins une image de l'environnement du monde réel selon une forme prédéfinie lors de la génération de l'image de mise au point,
dans lequel la forme prédéfinie est choisie parmi un cercle, un polygone et une ellipse,
dans lequel l'au moins un capteur d'imagerie (106, 108, 200) comprend au moins un capteur d'imagerie de contexte par oeil de l'utilisateur et au moins un capteur d'imagerie de mise au point par oeil de l'utilisateur, l'au moins une image de l'environnement du monde réel comprenant au moins une première image capturée par l'au moins un capteur d'imagerie de contexte et au moins une seconde image capturée par l'au moins un capteur d'imagerie de mise au point, dans lequel un champ de vision de l'au moins un capteur d'imagerie de mise au point est plus étroit qu'un champ de vision de l'au moins un capteur d'imagerie de contexte,
**caractérisé en ce que** le processeur (110) est configuré pour commander l'au moins un capteur d'imagerie de contexte afin d'utiliser au moins deux expositions différentes à l'aide d'une technique de gamme dynamique élevée, dans lequel une exposition plus longue parmi les au moins deux expositions différentes est utilisée pour la région de précision visuelle (406) de l'au moins une première image (402, 506), la région de précision visuelle (406) de l'au moins une première image (402, 506) étant basée sur la direction du regard de l'utilisateur.

2. Système selon la revendication 1, dans lequel le processeur est configuré pour compartimenter les pixels de l'au moins une image lors de la génération de l'image de mise au point et/ou de l'image de contexte.

3. Système selon l'une quelconque des revendications précédentes, dans lequel le processeur est configuré pour actionner une direction de vision de l'au moins un capteur d'imagerie de mise au point avant de capturer l'au moins une seconde image, sur la base de la direction du regard de l'utilisateur.

4. Système selon l'une quelconque des revendications précédentes, comprenant en outre au moins un élément optique pour effectuer un zoom optique dans une région de précision visuelle de l'au moins une seconde image, la région de précision visuelle de l'au moins une seconde image étant basée sur la direction du regard de l'utilisateur.

5. Système selon la revendication 4, dans lequel le processeur est configuré pour ajuster une tonalité de l'au moins une première image par rapport à une tonalité de l'au moins une seconde image.

6. Procédé de production d'une image de contexte et d'une image de mise au point pour un appareil d'affichage (104), par l'intermédiaire d'un système d'imagerie (102) comprenant au moins un capteur d'imagerie (106, 108, 200) par oeil d'un utilisateur et un processeur (110), le système d'imagerie étant couplé en communication avec l'appareil d'affichage, le procédé comprenant :
- la réception, à partir du dispositif d'affichage, des informations indiquant une direction du regard de l'utilisateur ;
- la commande de l'au moins un capteur d'imagerie pour capturer au moins une image d'un environnement du monde réel ;
- la détermination d'une région de précision visuelle de l'au moins une image, sur la base de la direction du regard de l'utilisateur ;
- le traitement de l'au moins une image pour générer l'image de contexte et l'image de mise au point, l'image de contexte ayant une première résolution et l'image de mise au point une seconde résolution, la seconde résolution étant supérieure à la première résolution, dans lequel le traitement de l'au moins une image comprend le recadrage de l'au moins une image pour générer l'image de mise au point de manière à ce que l'image de mise au point corresponde sensiblement à la région de précision visuelle de l'au moins une image ;
- la communication de l'image de contexte générée et de l'image de mise au point générée à l'appareil d'affichage ; et
- la combinaison optique d'une projection de l'image de contexte générée et d'une projection de l'image de mise au point générée pour l'affichage ;
dans lequel le système d'imagerie comprend un moyen pour ajuster une orientation de l'au moins un capteur d'imagerie, et dans lequel le procédé comprend en outre :
- la réception, à partir de l'appareil d'affichage, des informations indiquant une orientation de la tête de l'utilisateur ;
- la commande du moyen pour ajuster l'orientation de l'au moins un capteur d'imagerie sur la base de l'orientation de la tête de l'utilisateur ; et
- le recadrage de l'au moins une image selon une forme prédéfinie lors de la génération de l'image de mise au point,
dans lequel la forme prédéfinie est choisie parmi un cercle, un polygone et une ellipse,
dans lequel l'au moins un capteur d'imagerie comprend au moins un capteur d'imagerie de contexte par oeil de l'utilisateur et au moins un capteur d'imagerie de mise au point par oeil de l'utilisateur, l'au moins une image comprenant au moins une première image capturée par l'au moins un capteur d'imagerie de contexte et au moins une seconde image capturée par l'au moins un capteur d'imagerie de mise au point, un champ de vision de l'au moins un capteur d'imagerie de mise au point étant plus étroit qu'un champ de vision de l'au moins un capteur d'imagerie de contexte, et dans lequel le procédé comprend en outre l'actionnement d'une direction de vision de l'au moins un capteur d'imagerie de mise au point avant de capturer l'au moins une seconde image, sur la base de la direction du regard de l'utilisateur,
**caractérisé en ce que** le procédé comprend en outre la commande de l'au moins un capteur d'imagerie de contexte pour utiliser au moins deux expositions différentes à l'aide d'une technique de gamme dynamique élevée, dans lequel une exposition plus longue parmi les au moins deux expositions différentes est utilisée pour une région de précision visuelle de l'au moins une première image, la région de précision visuelle de l'au moins une première image étant basée sur la direction du regard de l'utilisateur.

7. Procédé selon la revendication 6, comprenant en outre le compartimentage des pixels de l'au moins une image lors de la génération de l'image de mise au point et/ou de l'image de contexte.

8. Procédé selon l'une quelconque des revendications précédentes, comprenant en outre l'utilisation d'au moins un élément optique du système d'imagerie pour effectuer un zoom optique dans une région de précision visuelle de l'au moins une seconde image, la région de précision visuelle de l'au moins une seconde image étant basée sur la direction du regard de l'utilisateur.
